# EUROPEAN PATENT APPLICATION

(11) **EP 4 243 455 A1**
(43) Date of publication of application: **13.09.2023**
(21) Application number: 20964485.5
(22) Date of filing: 07.12.2020
(51) Int. Cl.: H04W 4/02

(54) **METHOD AND DEVICE FOR DETERMINING LOCATION OF TERMINAL DEVICE**

(71) Applicant: Huawei Technologies Co., Ltd., Shenzhen, Guangdong 518129 (CN)
(72) Inventor: HAO, Jinping, Shenzhen, Guangdong 518129 (CN); JIN, Yinghao, Shenzhen, Guangdong 518129 (CN)
(74) Representative: Isarpatent
(86) International application number: PCT/CN2020/134349
(87) International publication number: WO 2022/120538

(57) **Abstract**

This application provides a method for determining a location of a terminal device and a device. The method includes: A location management function center network element determines location information of a relay node; the location management function center network element obtains measurement information of a plurality of to-be-measured terminal devices; and the location management function center network element determines, based on the location information of the relay node and the measurement information of the plurality of to-be-measured terminal devices, location information of the plurality of to-be-measured terminal devices. In the method, the location management function center network element obtains the measurement information of the plurality of to-be-measured terminal devices through the relay node, and further determines, based on the location information of the relay node and the measurement information, the location information of the plurality of to-be-measured terminal devices, without performing a separate signaling interaction, in a location procedure, with each terminal device in the plurality of to-be-measured terminal devices, thereby reducing signaling overheads and saving network resources.

## Description

### TECHNICAL FIELD

This application relates to the communication field, and more specifically, to a method for determining a location of a terminal device and a device.

### BACKGROUND

With the advent of new industries such as autonomous driving, a smart city, and the Internet of Things, communication technologies are increasingly integrated in these industries. These industries bring requirements for locating a terminal device. When a large quantity of terminal devices in an area need to be located, for example, in asset counting and asset tracking for campus material, a separate location procedure is required to be performed for each terminal device in a current location method. A core network device needs to perform signaling interactions with each terminal device for a plurality of times through a radio access network device in which the large quantity of terminal devices are located. Therefore, in a scenario in which a large quantity of terminals need to be located in a same area, there may be heavy signaling load for both the core network device and the radio access network device, consuming a large amount of network resources. For the terminal device, a complete terminal device location procedure relates to measurement of the terminal device or periodic sending of a sounding reference signal (Sounding Reference Signal, SRS). As a result, energy consumption of the terminal device is high.

### SUMMARY

This application provides a method for determining a location of a terminal device and a device, so that in a process of determining locations of a plurality of to-be-measured terminal devices, a location management function center network element does not need to perform a separate signaling interaction, in a location procedure, with each terminal device in the plurality of to-be-measured terminal devices or a radio access network device, thereby reducing signaling overheads in the location procedure of the plurality of to-be-measured terminal devices, and saving network resources.

According to a first aspect, a method for determining a location of a terminal device is provided. The method is performed by a location management function center network element, and includes: The location management function center network element determines location information of a relay node; the location management function center network element obtains measurement information of a plurality of to-be-measured terminal devices; and the location management function center network element determines location information of the plurality of to-be-measured terminal devices based on the location information of the relay node and the measurement information of the plurality of to-be-measured terminal devices.

In the foregoing technical solution, the location management function center network element obtains the measurement information of the plurality of to-be-measured terminal devices through the relay node, and determines the location information of the plurality of to-be-measured terminal devices based on the location information of the relay node and the measurement information of the plurality of to-be-measured terminal devices. Therefore, the location management function center network element determines the location information of the plurality of to-be-measured terminal devices without performing a separate location procedure with each terminal device in the plurality of to-be-measured terminal devices. This can reduce signaling overheads in a location procedure of the plurality of to-be-measured terminal devices, and save network resources.

With reference to the first aspect, in a possible implementation of the first aspect, before the location management function center network element obtains the location information of the relay node, the method further includes: The location management function center network element sends a request capabilities (Request Capabilities) message to a plurality of terminal devices; the location management function center network element receives provide capabilities (Provide Capabilities) messages sent by the plurality of terminal devices or a radio access network device; when a terminal device in the plurality of terminal devices has a sidelink-supporting capability, location capability feedback information of the terminal device carries information about the sidelink-supporting capability; and the location management function center network element determines, based on the location capability feedback information, one terminal device in a plurality of terminal devices having the sidelink-supporting capability as the relay node, and determines all or some of the remaining plurality of terminal devices having the sidelink-supporting capability as the plurality of to-be-measured terminal devices.

With reference to the first aspect, in another possible implementation of the first aspect, before the location management function center network element obtains the location information of the relay node, the method further includes: The location management function center network element sends a sixth request message to the radio access network device, where the sixth request message is used to request the radio access network device to determine the relay node, and the sixth request message includes identities of the plurality of to-be-measured terminal devices; and the location management function center network element receives an identity of a relay node from the radio access network device, where the relay node is determined by the radio access network device based on the identities of the plurality of to-be-measured terminal devices.

With reference to the first aspect, in another possible implementation of the first aspect, before the location management function center network element obtains the location information of the relay node, the method further includes: The location management function center network element determines a serving radio access network device of the plurality of to-be-measured terminal devices as the relay node.

With reference to the first aspect, in another possible implementation of the first aspect, that the location management function center network element obtains the measurement information of the plurality of terminal devices includes: The location management function center network element sends a first request message to the relay node, where the first request message is used to request the relay node to report the measurement information of the plurality of terminal devices, the first request message carries the identities of the plurality of to-be-measured terminal devices, or the first request message carries first indication information, and the first indication information indicates the relay node to determine the plurality of to-be-measured terminal devices; and the location management function center network element receives a first response message sent by the relay node, where the first response message includes the measurement information of the plurality of terminal devices.

With reference to the first aspect, in another possible implementation of the first aspect, that the location management function center network element obtains the measurement information of the plurality of terminal devices includes: The location management function center network element sends a fourth request message, where the fourth request message is used to request measurement data or the location information of the relay node, the fourth request message carries second indication information, and the second indication information indicates the relay node to report the measurement information of the plurality of terminal devices; and the location management function center network element receives a fourth response message sent by the relay node, where the fourth response message includes measurement data or the location information of the relay node, and measurement information of the plurality of to-be-measured terminal devices.

In the foregoing technical solution, in a process of requesting the measurement data or the location information of the relay node, the location management function center network element simultaneously requests the relay node to send the measurement information of the to-be-measured terminal devices, so that a signaling procedure can be further simplified, and a location latency can be reduced.

With reference to the first aspect, in another possible implementation of the first aspect, that the location management function center network element determines the location information of the relay node includes: The location management function center network element determines, the location information of the relay node based on the measurement data of the relay node.

With reference to the first aspect, in another possible implementation of the first aspect, the first request message includes at least one of the following information: periodic reporting indication information, a reporting period, a quantity of times of reporting, and a type of measurement data.

With reference to the first aspect, in another possible implementation of the first aspect, the first response message further includes at least one of the following information: the identities of the plurality of to-be-measured terminal devices, measurement data of the plurality of to-be-measured terminal devices, and relative location information of the plurality of to-be-measured terminal devices relative to the relay node. The relative location information includes distances and/or angles from the plurality of to-be-measured terminal devices to the relay node, or relative location coordinates of the plurality of to-be-measured terminal devices relative to the relay node. The identities of the plurality of to-be-measured terminal devices are used by the location management function center network element to determine location estimation of the plurality of to-be-measured terminal devices.

With reference to the first aspect, in another possible implementation of the first aspect, the measurement data includes any one or more of the following data: a sidelink reference signal receiving power, an angle of arrival, and a time difference between sending and receiving.

According to a second aspect, a method for determining a location of a terminal device is provided. The method is performed by a relay node, and includes: The relay node sends location information or measurement data of the relay node to a location management function center network element, where the measurement data is used by the location management function center network element to determine location information of the relay node; the relay node obtains measurement information of a plurality of to-be-measured terminal devices; and the relay node sends the measurement information of the plurality of to-be-measured terminal devices to the location management function center network element, so that the location management function center network element determines location information of the plurality of to-be-measured terminal devices based on the location information of the relay node and the measurement information of the plurality of to-be-measured terminal devices.

In the foregoing technical solution, the relay node sends a second request message to the plurality of to-be-measured terminal devices through multicast or unicast, and reports the measurement data of the relay node and the measurement data that is of the plurality of to-be-measured terminal devices and that is received by the relay node to the location management function center network element, so that the location management function center network element determines locations of the plurality of to-be-measured terminal devices. The relay node sends a measurement request message of the plurality of to-be-measured terminal devices through broadcast or multicast, so that signaling overheads in a location procedure of the plurality of to-be-measured terminal devices can be reduced, and network resources is saved.

With reference to the second aspect, in a possible implementation of the second aspect, before the relay node obtains, the measurement information of the plurality of to-be-measured terminal devices, the method further includes: The relay node receives a first request message sent by the location management function center network element, where the first request message is used to request the relay node to report the measurement information of the plurality of to-be-measured terminal devices, the first request message carries identities of the plurality of to-be-measured terminal devices or the first request message carries first indication information, and the first indication information indicates the relay node to determine the plurality of to-be-measured terminal devices.

With reference to the second aspect, in a possible implementation of the second aspect, when the first request message carries the identities of the plurality of to-be-measured terminal devices, that the relay node obtains the measurement information of the plurality of to-be-measured terminal devices includes: The relay node sends a second request message to the plurality of to-be-measured terminal devices through multicast or unicast, where the second request message is used to request measurement data of the plurality of to-be-measured terminal devices; and the relay node receives a second response message sent by the plurality of to-be-measured terminal devices, where the second response message includes the measurement data of the plurality of to-be-measured terminal devices, and the measurement information of the plurality of to-be-measured terminal devices includes the measurement data of the plurality of to-be-measured terminal devices.

With reference to the second aspect, in a possible implementation of the second aspect, when the first request message carries the first indication information, that the relay node obtains the measurement information of the plurality of to-be-measured terminal devices includes: The relay node sends a probe message to a plurality of terminal devices through broadcast; the relay node receives a response message sent by the plurality of terminal devices, where the response message includes identities of the plurality of terminal devices; and the relay node determines the plurality of terminal devices as the plurality of to-be-measured terminal devices, where the measurement information of the plurality of to-be-measured terminal devices includes identities of the plurality of to-be-measured terminal devices.

With reference to the second aspect, in another possible implementation of the second aspect, the measurement data includes any one or more of the following information: a sidelink reference signal receiving power, an angle of arrival, and a time difference between sending and receiving.

With reference to the second aspect, in another possible implementation of the second aspect, the method includes: The relay node determines relative location information of the plurality of to-be-measured terminal devices relative to the relay node based on the measurement data of the plurality of to-be-measured terminal devices.

With reference to the second aspect, in another possible implementation of the second aspect, the relay node determines the relative location information of the plurality of to-be-measured terminal devices relative to the relay node based on the measurement data of the plurality of to-be-measured terminal devices. For example, the relay node determines distances and/or angles from the plurality of to-be-measured terminal devices to the relay node based on the measurement data of the plurality of to-be-measured terminal devices. Alternatively, the relay node determines relative location coordinates of the plurality of to-be-measured terminal devices based on the measurement data of the plurality of to-be-measured terminal devices.

According to a third aspect, a location management function center network element is provided, where the location management function center network element includes: a determining unit, configured to determine location information of a relay node, and an obtaining unit, configured to obtain measurement information of a plurality of to-be-measured terminal devices. The determining unit is further configured to determine location information of the plurality of to-be-measured terminal devices based on the location information of the relay node and the measurement information.

With reference to the third aspect, in a possible implementation of the third aspect, the location management function center network element further includes: a sending unit, configured to send a request capabilities (Request Capabilities) message to a plurality of terminal devices, and a receiving unit, configured to receive provide capabilities (Provide Capabilities) messages sent by the plurality of terminal devices or a radio access network device. When a terminal device in the plurality of terminal devices has a sidelink-supporting capability, location capability feedback information of the terminal device carries information about the sidelink-supporting capability; the determining unit is further configured to determine, based on the location capability feedback information, one terminal device in a plurality of terminal devices having the sidelink-supporting capability as the relay node; and the determining unit is further configured to determine all or some terminal devices, other than the relay node, of the remaining plurality of terminal devices having the sidelink-supporting capability as the plurality of to-be-measured terminal devices.

With reference to the third aspect, in another possible implementation of the third aspect, the sending unit is further configured to send a sixth request message to the radio access network device, where the sixth request message is used to request the radio access network device to determine the relay node, the sixth request message includes identities of the plurality of to-be-measured terminal devices, and the plurality of to-be-measured terminal devices are terminal devices that have a sidelink-supporting capability; and the receiving unit is configured to receive an identity of the relay node from the radio access network device, where the relay node is determined by the radio access network device based on the identities of the plurality of to-be-measured terminal devices.

With reference to the third aspect, in another possible implementation of the third aspect, the determining unit is further configured to determine a serving radio access network device of the plurality of to-be-measured terminal devices as the relay node.

With reference to the third aspect, in another possible implementation of the third aspect, the obtaining unit is specifically configured to: send a first request message to the relay node, where the first request message is used to request the relay node to report the measurement information of the plurality of to-be-measured terminal devices; and receive a first response message from the relay node, where the first response message includes the measurement information of the plurality of to-be-measured terminal devices.

With reference to the third aspect, in another possible implementation of the third aspect, the obtaining unit is specifically configured to: send a fourth request message to the relay node, where the fourth request message is used to request measurement data or the location information of the relay node, the fourth request message carries second indication information, and the second indication information indicates the relay node to report the measurement information of the plurality of to-be-measured terminal devices; and receive a fourth response message from the relay node, where the fourth response message includes the measurement data or the location information of the relay node and the measurement information of the plurality of to-be-measured terminal devices.

With reference to the third aspect, in another possible implementation of the third aspect, the determining unit is specifically configured to determine the location information of the relay node based on measurement data of the relay node.

With reference to the third aspect, in another possible implementation of the third aspect, the measurement information includes at least one of the following information: the identities of the plurality of to-be-measured terminal devices; measurement data of the plurality of to-be-measured terminal devices; and relative location information of the plurality of to-be-measured terminal devices relative to the relay node, for example, distances and/or angles from the plurality of to-be-measured terminal devices to the relay node or relative location coordinates of the plurality of to-be-measured terminal devices relative to the relay node.

According to a fourth aspect, a relay node is provided, and the relay node includes: a sending unit, configured to send location information or measurement data of the relay node to a location management function center network element, where the measurement data is used by the location management function center network element to determine the location information of the relay node; and an obtaining unit, configured to obtain measurement information of a plurality of to-be-measured terminal devices. The sending unit is further configured to send the measurement information of the plurality of to-be-measured terminal devices, so that the location management function center network element determines location information of the plurality of to-be-measured terminal devices based on the location information of the relay node and the measurement information of the plurality of to-be-measured terminal devices.

With reference to the fourth aspect, in a possible implementation of the fourth aspect, the relay node further includes a receiving unit, configured to receive a first request message sent by the location management function center network element, where the first request message is used to request the relay node to report the measurement information of the plurality of to-be-measured terminal devices, the first request message carries identities of the plurality of to-be-measured terminal devices, or the first request message carries first indication information, and the first indication information indicates the relay node to determine the plurality of to-be-measured terminal devices.

With reference to the fourth aspect, in a possible implementation of the fourth aspect, when the first request message carries the identities of the plurality of to-be-measured terminal devices, the obtaining unit is specifically configured to: send a second request message to the plurality of to-be-measured terminal devices through multicast or unicast, where the second request message is used to request the measurement data of the plurality of to-be-measured terminal devices; and receive a second response message sent by the plurality of to-be-measured terminal devices, where the second response message includes the measurement data of the plurality of to-be-measured terminal devices, and the measurement information of the plurality of to-be-measured terminal devices includes the measurement data of the plurality of to-be-measured terminal devices.

With reference to the fourth aspect, in a possible implementation of the fourth aspect, when the first request message carries the first indication information, the obtaining unit is specifically configured to: send a probe message to a plurality of terminal devices through broadcast; and receive a response message sent by the plurality of terminal devices, where the response message includes identities of the plurality of terminal devices; and the relay node determines the plurality of terminal devices as the plurality of to-be-measured terminal devices, where the measurement information of the plurality of to-be-measured terminal devices includes identities of the plurality of to-be-measured terminal devices.

With reference to the fourth aspect, in another possible implementation of the fourth aspect, the measurement data of the plurality of to-be-measured terminal devices includes any one or more of the following data: a sidelink reference signal receiving power, an angle of arrival, and a time difference between sending and receiving.

With reference to the fourth aspect, in another possible implementation of the fourth aspect, the relay node further includes a determining unit, where the determining unit is configured to determine relative location information of the plurality of to-be-measured terminal devices; and the sending unit is further configured to send the relative location information of the plurality of to-be-measured terminal devices to the location management function center network element.

With reference to the fourth aspect, in another possible implementation of the fourth aspect, the determining unit is further configured to: determine distances and/or angles from the plurality of to-be-measured terminal devices to the relay node based on measurement data of the plurality of to-be-measured terminal devices; or determine relative location coordinates of the plurality of to-be-measured terminal devices based on the measurement data of the plurality of to-be-measured terminal devices.

According to a fifth aspect, a location management function center network element is provided, including: at least one processor, one memory, and one transceiver. The memory is configured to store instructions, the transceiver is configured for communication between the location management function center network element and another device, and the stored instructions are directly or indirectly executed by the at least one processor, to enable the location management function center network element to perform the method according to the first aspect or any optional implementation of the first aspect.

According to a sixth aspect, a relay node is provided, including: at least one processor, one memory, and one transceiver. The memory is configured to store instructions, the transceiver is configured for communication between a terminal device and another device, and the stored instructions are directly or indirectly executed by the at least one processor, to enable the terminal device perform the method according to the second aspect or any optional implementation of the second aspect.

According to a seventh aspect, a chip system is provided, including: at least one processor. The at least one processor is configured to execute stored instructions, to enable a location management function center network element perform the method according to the first aspect or any optional implementation of the first aspect.

According to an eighth aspect, a chip system is provided, including at least one processor. The at least one processor is configured to execute stored instructions, so that a relay node can perform the method according to the second aspect or any optional implementation of the second aspect.

According to a ninth aspect, a computer storage medium is provided. The computer storage medium stores program instructions, and when the instructions are executed, a location management function center network element is enabled to perform the method according to the first aspect or any optional implementation of the first aspect.

According to a tenth aspect, a computer storage medium is provided. The computer storage medium stores program instructions, and when the instructions are executed, a relay node is enabled to perform the method according to the second aspect or any optional implementation of the second aspect.

According to an eleventh aspect, a computer program product is provided. The computer program product includes instructions, and when the instructions are executed, a location management function center network element is enabled to perform the method according to the first aspect or any optional implementation of the first aspect.

According to a twelfth aspect, a computer program product is provided. The computer program product includes instructions, and when the instructions are executed, a relay node is enabled to perform the method according to the second aspect or any optional implementation of the second aspect.

According to a thirteenth aspect, a system is provided. The system includes the location management function center network element according to the first aspect or any optional implementation of the first aspect, and the relay node according to the second aspect or any optional implementation of the second aspect.

With reference to the thirteenth aspect, in some implementations of the thirteenth aspect, the system further includes a radio access network device, and the radio access network device is configured to select the relay node based on a sixth request message sent by the location management function center network element.

### BRIEF DESCRIPTION OF DRAWINGS

FIG. 1 is a schematic block diagram of a wireless communication system architecture of a method for determining a location of a terminal device in conventional technologies;
FIG. 2 is a schematic flowchart of a method for determining a location of a terminal device in conventional technologies;
FIG. 3 is a schematic block diagram of an architecture of a wireless communication system of a method and a device for determining a location of a terminal device according to this application;
FIG. 4 is a schematic flowchart of a method for determining a location of a terminal device according to this application;
FIG. 5 is a schematic flowchart of another method for determining a location of a terminal device according to this application;
FIG. 6 is a schematic flowchart of another method for determining a location of a terminal device according to this application;
FIG. 7 is a schematic flowchart of another method for determining a location of a terminal device according to this application;
FIG. 8 is a schematic block diagram of a location management function center network element according to this application;
FIG. 9 is a schematic block diagram of a relay node according to this application; and
FIG. 10 is a schematic block diagram of a communication device according to this application.

### DESCRIPTION OF EMBODIMENTS

The following describes technical solutions of this application with reference to accompanying drawings.

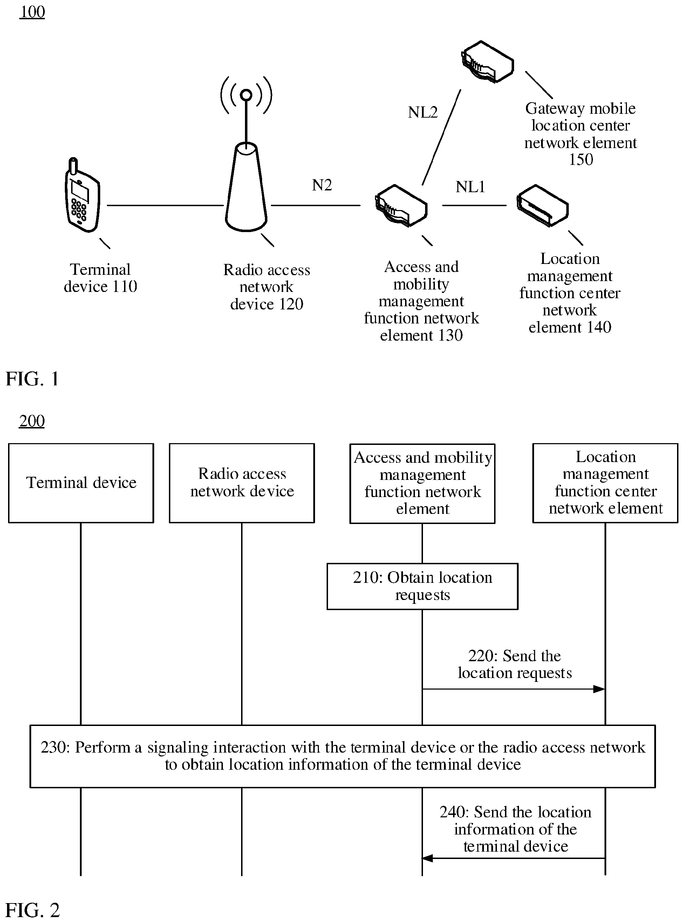

FIG. 1 is a schematic block diagram of a wireless communication system 100 architecture for locating a terminal device in conventional technologies. As shown in FIG. 1, the system 100 architecture includes a terminal device 110, a radio access network device 120, an access and mobility management function network element 130 (Access & Mobility Management Function, AMF), a location management function center network element 140 (Location Management Function, LMF), and a gateway mobile location center network element 150 (Gateway Mobile Location center, GMLC).

The terminal device in FIG. 1 may be configured to connect, through a radio air interface, to the radio access network device deployed by an operator, and then connect to a data network through the radio access network device. The radio access network device is mainly configured to implement functions such as a radio physical layer function, resource scheduling and radio resource management, radio access control, and mobility management. The access and mobility management function network element is mainly configured for device registration, security authentication, mobility management, location management, and the like for the terminal device. The location management function center network element is mainly configured to locate a location of the terminal device. The LMF is located inside a core network, and the LMF communicates with the radio access network device through the AMF. The gateway mobile location center is connected to an external network, and receives a location requirement from the external network or sends a location result to the external network.

In the network shown in FIG. 1, a connection may be established between functional units through a next generation (Next Generation, NG) interface to implement communication. For example, the terminal device establishes an air interface connection to the radio access network device through a new radio (New Radio, NR) interface, to transmit user plane data and control plane signaling. The terminal device may establish a control plane signaling connection to the AMF through an NG interface 1 (N1 for short). The AMF may establish a connection to the LMF through an NL1 interface. The AMF may establish a connection to the GLMC through an NL2 interface.

It should be understood that a name of an interface between the network elements in this application is merely an example, and the interface between the network elements may have another name. The name of the interface is not limited in this application.

It should be understood that the network architecture may further include another function unit or function network element. For example, the system 100 may further include a user plane function network element (User Plane Function, UPF), a data network (Data Network, DN), a session management function network element (Session Management Function, SMF), a policy control function network element (Policy Control Function, PCF), and an application function network element (Application Function, AF). The UPF is configured to perform forwarding, QoS control, charging statistics, and the like on a data flow. The DN may correspond to various business domains, for example, an IP multimedia subsystem (IP Multimedia Subsystem, IMS), Internet (Internet), an Internet Protocol television (Internet Protocol Television, IPTV), and another operator business domain. The DN is mainly configured to provide various data services for the terminal device that may include a network device such as a server, a router, and a gateway. The AMF is configured to perform access and mobility management for the terminal device, receive a mobility policy and a network selection policy of UE that are provided by the PCF, and executes the policies. The SMF is configured to perform a session and service flow control policy provided by the PCF and execute the policy. The PCF may generate a policy and charging control rule based on request information of the AF, an operator policy, user subscription information, and the like, to control a network behavior, and deliver the policy and the charging control rule to a control plane network element. The AF mainly provides a requirement of an application side for a network side, including a quality of service requirement of a service flow, a mobility requirement of user equipment, and the like.

It should be noted that, FIG. 1 is merely an example diagram of the architecture. The architecture of the network may further include other function units or function network elements, in addition to the function units shown in FIG. 1. This is not limited in embodiments of this application.

Some of the foregoing network elements may work independently, or may be combined to implement some control functions. For example, the AMF, the SMF, and the PCF may be combined to serve as a management device, to implement access control and mobility management functions such as access authentication, security encryption, and location registration of the terminal device, session management functions such as establishment, release, and changing of a user plane transmission path, and functions of analyzing data (such as congestion) related to some slices (slice) and data related to the terminal device. As a gateway device, the UPF mainly implements functions of user plane data routing and forwarding. For example, the UPF is responsible for filtering a data packet of the terminal device, transmitting/forwarding data, controlling a rate, and generating charging information.

A process of the method for locating a terminal device in the conventional technologies is briefly described below with reference to FIG. 2.

In step 210, an AMF obtains location requests from different devices, where the location requests indicate to locate a terminal device, and the location request information may come from three devices, which is respectively a location request sent by the terminal device, a location request sent by an external network (the external network notifies the AMF through a GMLC), or a location requirement of the AMF.

In step 220, the AMF sends the location requests to a location center LMF.

In step 230, the LMF performs an interaction of a signaling procedure with the terminal device or the radio access network device. The signaling procedure may include: The LMF queries a location capability of the terminal device or the radio access network device; the terminal device or the radio access network device feeds back the location capability; the LMF determines, based on the feedback of the location capability, a to-be-used location method, a type of measurement data sent to the terminal device, and assistance information sent by the radio access network device to the terminal device; the terminal device or the radio access network device sends the measurement data to the LMF after measuring the data; and the LMF calculates a location of the terminal device based on the measurement data. A signaling interaction between the LMF and the terminal device is based on an LTE positioning protocol (LTE Positioning Protocol, LPP), and a signaling interaction between the LMF and the radio access network device is based on an NR positioning protocol A (NR Positioning Protocol A, NRPPa).

In step 240, the LMF sends calculated location information of the terminal device to the AMF, and then the AMF returns the location information to the device that sends the location request.

In the conventional technologies, when a plurality of terminal devices in an area need to be located, the foregoing location procedure needs to be performed for each terminal device separately, and the LMF needs to perform signaling interactions with each terminal device for a plurality of times through the radio access network device in which the plurality of terminal devices are located, consuming a large amount of network resources. In addition, for the terminal device, a complete terminal device location procedure involves measurement of the terminal device or periodic sending of a sounding reference signal (Sounding Reference Signal, SRS) to the radio access network device. As a result, energy consumption of the terminal device is high.

Based on the foregoing problems, this application provides a method and a device for determining a location of a terminal device. An LMF obtains measurement information of a plurality of to-be-measured terminal devices through a relay node at a known location, to determine location information of the plurality of to-be-measured terminal devices. The LMF obtains the measurement information of the plurality of to-be-measured terminal devices through the relay node at the known location, and does not need to perform a separate location procedure with each to-be-measured terminal device through a radio access network device, thereby reducing signaling overheads in a procedure of locating the plurality of terminal devices. In addition, the to-be-measured terminal device is close to the relay node, so that in a measurement process, when the to-be-measured terminal device sends a message to the relay node, sending power consumption of the to-be-measured terminal device can be saved, and energy consumption of the to-be-measured terminal device is reduced.

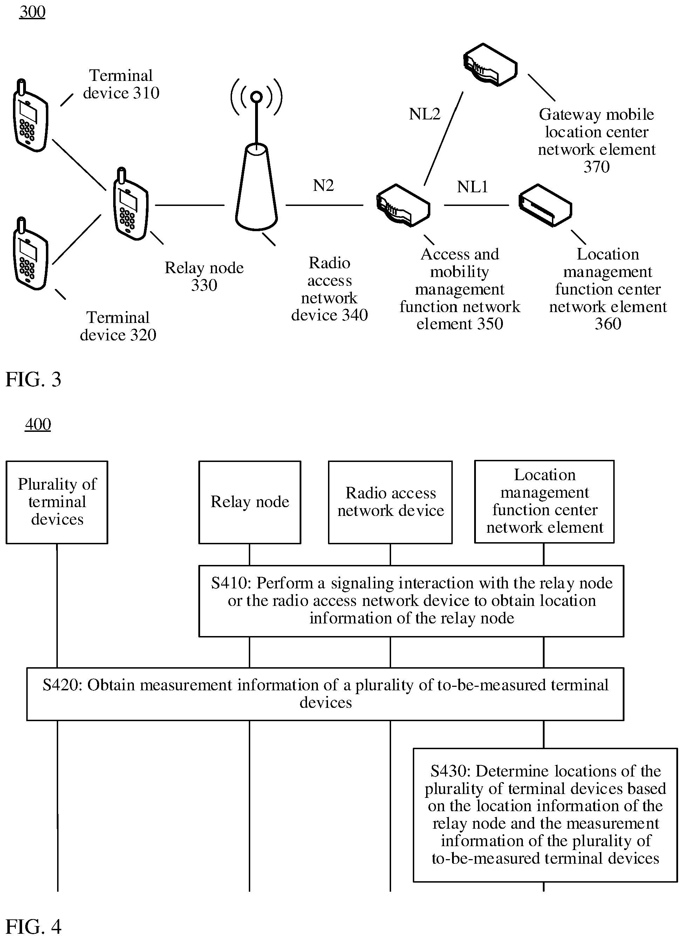

The following is a schematic block diagram of and architecture of a wireless communication system 300 for determining a location of a terminal device according to this application. As shown in FIG. 3, the system 300 includes a terminal device 310, a terminal device 320, a relay node 330, a radio access network device 340, an access and mobility management function 350, a location management function center network element 360, and a gateway mobile location center 370. It should be noted that, the system 300 may include a plurality of relay nodes, and the plurality of relay nodes may respectively correspond to one or more terminal devices. This is not limited in this application.

It should be understood that, for descriptions of another network element in the system shown in FIG. 3, refer to related descriptions of FIG. 1. To avoid repetition, details are not described herein again.

The technical solutions of embodiments of this application may be applied to various communication systems, such as a global system of mobile communication (Global System of Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD), a universal mobile telecommunication system (Universal Mobile Telecommunication System, UMTS), a worldwide interoperability for microwave access (Worldwide Interoperability for Microwave Access, WiMAX) communication system, a future 5th generation (5th Generation, 5G) system, new radio (New Radio, NR), and the like.

The terminal device in embodiments of this application may refer to user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a future 5G network, a terminal device in a future evolved public land mobile network (Public Land Mobile Network, PLMN), or the like. This is not limited in embodiments of this application.

The radio access network device in embodiments of this application may be a device configured to communicate with the terminal device. The access network device may be a base transceiver station (Base Transceiver Station, BTS) in the global system of mobile communication (Global System of Mobile communication, GSM) or the code division multiple access (Code Division Multiple Access, CDMA) system, or may be a NodeB (NodeB, NB) in the wideband code division multiple access (Wideband Code Division Multiple Access, WCDMA) system, or may be an evolutional NodeB (Evolutional NodeB, eNB, or eNodeB) in the LTE system, or may be a radio controller in a cloud radio access network (Cloud Radio Access Network, CRAN) scenario. Alternatively, the radio access network device may be a relay station, an access point, a vehicle-mounted device, a wearable device, a network device in the future 5G network, a network device in the future evolutional PLMN network, or the like. This is not limited in this embodiment of this application.

The relay node in this embodiment of this application may be the terminal device or the radio access network device, for example, a terminal device supporting a sidelink (sidelink), a terminal device at a fixed location, or an integrated access and backhaul (Integrated Access and Backhaul, IAB) node.

With reference to FIG. 4, the following describes in detail a method 400 for determining a location of a terminal device according to this application. FIG. 4 is a schematic flowchart of a method 400 for determining a location of a terminal device according to an embodiment of this application. The method 400 may be applied to the scenario shown in FIG. 3, and certainly may further be applied to another communication scenario. This is not limited in this embodiment of this application.

In S410, an LMF performs a signaling interaction with a relay node and/or a radio access network device, to determine location information of the relay node.

It should be understood that, in this embodiment of this application, before the LMF determines the location information of the relay node, the method may further include: The LMF determines the relay node. In a possible implementation, the LMF first determines terminal devices that have a sidelink-supporting (sidelink) capability in a plurality of terminal devices, and selects one terminal device from the plurality of terminal devices that have the sidelink-supporting capability as the relay node. A plurality of remaining terminal devices that have the sidelink-supporting capability are used as a plurality of to-be-measured terminal devices.

Specifically, the LMF sends a request capabilities (Request Capabilities) message to the plurality of terminal devices, where the message is used by the LMF to query a location capability of the terminal devices, and the capability request message carries information for querying whether the terminal devices have the sidelink-supporting capability. The LMF receives provide capabilities (Provide Capabilities) messages sent by a plurality of terminal devices. The messages are used by the terminal devices or the radio access network device to feed back location capability information, for example, a location method supported by the terminal devices and supported assistance data. If there is a terminal device that have the sidelink-supporting capability in the plurality of terminal devices, the type of terminal devices may add the sidelink-supporting capability to the feedback information. The LMF selects, based on the feedback information, one terminal device from the type of terminal devices as the relay node. For example, the LMF randomly selects one terminal device from the type of terminal devices as the relay node.

In another possible implementation, the LMF sends a fifth request message to the radio access network device, where the fifth request message is used to request the radio access network device to determine the relay node. Specifically, the fifth request carries identities (identity, ID) of the plurality of to-be-measured terminal devices, the plurality of to-be-measured terminal devices are terminal devices that have the sidelink-supporting capability, and the radio access network device selects one terminal device in the plurality of to-be-measured terminal devices as the relay node based on an ID list of the plurality of to-be-measured terminal devices. For example, the radio access network device selects the relay node based on a location of a cell in which the terminal device is located in the ID list.

In another possible implementation, the LMF determines a radio access network device shared by the plurality of to-be-measured terminal devices as the relay node.

After the LMF selects the relay node, the LMF performs a signaling interaction with the relay node and/or the radio access network device, to determine the location information of the relay node. The LMF may determine the location information of the relay node through any location method. For example, the LMF sends a request message to the relay node, where the request message is used to request measurement data of the relay node; and the LMF receives a response message sent by the relay node, where the response message includes the measurement data or location estimation information of the relay node. For example, the measurement data received by the LMF from the relay node may include a time difference of arrival (time difference of arrival, TDOA), a reference signal receiving power (reference signal receiving power, RSRP), an angle of arrival (angle of arrival, AoA), and the like. The LMF determines the location information of the relay node based on the measurement data. Alternatively, the LMF receives a measurement value sent by the relay node and provided by a global navigation satellite system (Global Navigation Satellite, GNSS), where the measurement value is used as the location estimation information of the relay node. Alternatively, when the relay node is the radio access network device, the LMF sends a location request message to the radio access network device, where the location request message is used to request location information of the radio access network device.

In S420, the LMF obtains measurement information of the plurality of to-be-measured terminal devices.

The measurement information of the terminal devices may be at least one of the following information: the identities of the terminal devices, measurement data of the terminal devices, and relative location information of the terminal devices relative to the relay node.

Specifically, in a possible implementation, the plurality of to-be-measured terminal devices may be a plurality of to-be-measured terminal devices known to the LMF.

The LMF obtains the measurement data of the plurality of to-be-measured terminal devices through the relay node, or the LMF obtains, through the relay node, relative location information of the plurality of to-be-measured terminal devices relative to the relay node that is determined by the relay node, where the relative location information is determined by the relay node based on the measurement data of the plurality of terminal devices.

In another possible implementation, the plurality of to-be-measured terminal devices are a plurality of terminal devices unknown to the LMF, and the LMF obtains, through the relay node, the identities of the plurality of to-be-measured terminal devices that is determined by the relay node, or the LMF obtains, through the relay node, the identities of the plurality of to-be-measured terminal devices that is determined by the relay node and the measurement data of the plurality of to-be-measured terminal devices; or the LMF obtains, through the relay node, the identities of the plurality of terminal devices that is determined by the relay node and relative location information of the plurality of terminal devices relative to the relay node.

It should be understood that, sequence numbers of the foregoing two processes do not mean an execution sequence. The execution sequence of the processes is determined based on functions and internal logic of the processes, and does not constitute any limitation on the implementation processes of embodiments of this application. For example, S410 may be performed at any moment when S420 is performed.

In S430, the LMF determines location information of the plurality of to-be-measured terminal devices based on the location information of the relay node and the measurement information of the plurality of to-be-measured terminal devices.

Specifically, when the plurality of to-be-measured terminal devices are the plurality of terminal devices known to the LMF, the LMF determines the location information of the plurality of to-be-measured terminal devices based on the location information of the relay node and the measurement data of the plurality of to-be-measured terminal devices that is reported by the relay node, or the LMF determines the location information of the plurality of to-be-measured terminal devices based on the location information of the relay node and the relative location information of the plurality of to-be-measured terminal devices relative to the relay node that is reported by the relay node, or the LMF estimates the location information of the plurality of to-be-measured terminal devices based on the location information of the relay node. For example, the LMF uses a part or all of the location information of the relay node as the location information of the plurality of to-be-measured terminal devices.

When the plurality of to-be-measured terminal devices are the plurality of terminal devices unknown to the LMF, the LMF determines the plurality of to-be-measured terminal devices through the relay node, where the measurement information of the plurality of to-be-measured terminal devices may be the identities of the plurality of to-be-measured terminal devices, and the LMF estimates the location information of the plurality of to-be-measured terminal devices based on the location information of the relay node and the identities of the plurality of to-be-measured terminal devices. Alternatively, the measurement information of the plurality of to-be-measured terminal devices may be the identities of the plurality of to-be-measured terminal devices and the measurement data of the plurality of to-be-measured terminal devices, and the LMF determines the plurality of to-be-measured terminal devices based on the identities of the plurality of to-be-measured terminal devices, and determines the location information of the plurality of to-be-measured terminal devices based on the location information of the relay node and the measurement data of the plurality of to-be-measured terminal devices. Alternatively, the measurement information of the plurality of to-be-measured terminal devices may be the identities of the plurality of to-be-measured terminal devices and the relative location information of the plurality of to-be-measured terminal devices relative to the relay node, and the LMF determines the plurality of to-be-measured terminal devices based on the identities of the plurality of to-be-measured terminal devices, and determines the location information of the plurality of to-be-measured terminal devices based on the location information of the relay node and the measurement information of the plurality of to-be-measured terminal devices.

Therefore, in this embodiment of this application, the LMF obtains the measurement information of the plurality of to-be-measured terminal devices through the relay node, and determines locations of the plurality of terminal devices based on the location information of the relay node and the measurement information. It is unnecessary to perform a signaling interaction, in a location procedure, with each terminal device in the plurality of to-be-measured terminal devices to obtain the location information of the plurality of terminal devices, thereby reducing signaling overheads in the location procedure for locating the plurality of terminal devices, and saving network resources. In addition, a distance between the to-be-measured terminal device and the relay node is usually shorter than a distance between the to-be-measured terminal device and the radio access network device, so that when the to-be-measured terminal device sends a message to the relay node, sending power consumption of the to-be-measured terminal device can be saved, and power consumption of the to-be-measured terminal device is reduced.

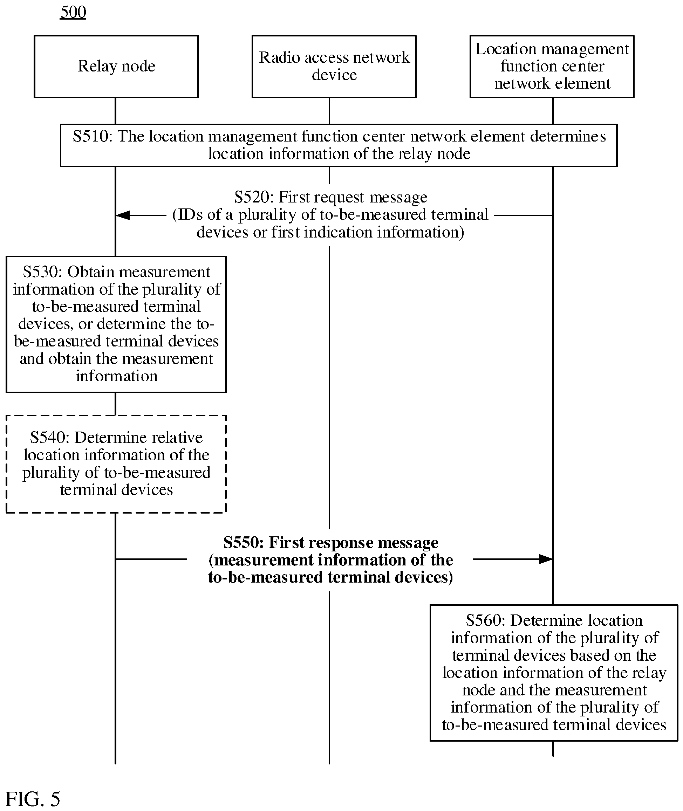

With reference to FIG. 5 to FIG. 7, the following describes in detail a method for determining locations of a plurality of terminal devices according to an embodiment of this application. FIG. 5 is a schematic flowchart of a method for locating a terminal device according to this application. As shown in FIG. 5, the method includes the following steps.

S510: An LMF determines location information of a relay node, where the relay node is configured to report measurement information of a plurality of to-be-measured terminal devices. The LMF determines the location information of the relay node as described in S410, and details are not described herein again.

S520: The LMF sends a first request message to the relay node, where the first request message is used to request the relay node to report the measurement information of the plurality of to-be-measured terminal devices, and the relay node receives the first request message.

Specifically, the first request message may be a measurement request (Measurement Request) message, and this request name is merely used as an example, or may be another name. The first request message is used to request the relay node to report the measurement information of the plurality of to-be-measured terminal devices, and the first request message may include one or more of the following information:
Report characteristics: a periodic reporting indication, a reporting period, and a quantity of times of reporting;
Types of the measurement data: S-RSRP, AOA, Tx Rx time difference, and the like;

When the plurality of to-be-measured terminal devices are terminal devices unknown to the LMF, the first request message further includes first indication information, and the first indication information indicates the relay node to determine the plurality of to-be-measured terminal devices.

When the LMF knows the plurality of to-be-measured terminal devices, the first request message further includes IDs of the plurality of to-be-measured terminal devices. Specifically, the IDs of the plurality of to-be-measured terminal devices may be PC5 IDs allocated by a radio access network, for example, sidelink radio network temporary identifiers (sidelink Radio Network Temporary Identifiers, SL-RNTIs). When the IDs are used, the LMF may request the radio access network for the PC5 IDs of the terminal devices. For example, the LMF sends a request message to the radio access network to request the PC5 IDs of the terminal devices. The message may carry temporary IDs of the terminal devices in a core network, for example, GUTIs. A base station sends, to the LMF, the PC5 IDs of the terminal devices corresponding to the temporary IDs in the core network.

S530: The relay node obtains the measurement information of the to-be-measured terminal devices based on the first request message.

In a possible implementation, the relay node receives the first request message, where the first request message carries the IDs of the plurality of to-be-measured terminal devices. The relay node sends, through multicast or unicast, a second request message to the to-be-measured terminal devices indicated by the plurality of IDs, where the second request message is used to request the measurement data of the to-be-measured terminal devices, and the second request message includes at least one of the foregoing information types of the measurement data. The relay node receives a second response message, where the second response message includes the measurement data of the terminal devices.

In another possible implementation, the relay node receives a first request message, where the first request message carries the first indication information. After receiving the first request message, the relay node sends a probe message through broadcast, where the probe message is used by the relay node to determine the to-be-measured terminal devices. Specifically, the relay node determines the to-be-measured terminal devices by receiving a response message of the probe message, where the response message carries IDs of terminal devices that receive the probe message.

Alternatively, after receiving the first request message, the relay node sends a third request message to a plurality of unknown terminal devices through broadcast. The relay node receives third response messages sent by the plurality of terminal devices. The relay node determines the plurality of terminal devices as to-be-measured terminal devices. The third response message carries the IDs of the plurality of terminal devices. Further, the third response message may further carry the measurement data of the plurality of terminal devices.

S540: Optionally, the relay node may calculate relative location information of the to-be-measured terminal devices based on the received measurement data of the to-be-measured terminal devices. For example, the relay node determines, based on the measurement data of the to-be-measured terminal devices, distances and/or angles from the to-be-measured terminal devices to the relay node. Alternatively, the relay node determines, based on the measurement data of the to-be-measured terminal devices, relative location coordinates of the to-be-measured terminal devices that is obtained by using the relay node as an origin.

S550: The relay node sends a first response message to the LMF, and correspondingly, the LMF receives the first response message, where the first response message includes the measurement information of the plurality of to-be-measured terminal devices, and the measurement information is used by the LMF to determine the location information of the to-be-measured terminal devices.

S560: The LMF determines the location information of the plurality of terminal devices based on the measurement information of the to-be-measured terminal devices and the location information of the relay node.

In a possible implementation, the measurement information includes the measurement data of the plurality of to-be-measured terminal devices, and the LMF determines the location information of the plurality of terminal devices based on the measurement data and the location information of the relay node. Alternatively, the measurement information includes the relative location information of the plurality of to-be-measured terminal devices in S530, and the LMF determines the location information of the plurality of to-be-measured terminal devices based on the relative location information and the location information of the relay node.

In another possible implementation, the measurement information includes the IDs and the measurement data of the plurality of to-be-measured terminal devices, and the LMF determines the plurality of to-be-measured terminal devices based on the IDs of the terminal devices, and determines the location information of the plurality of to-be-measured terminal devices based on the location information of the relay node and the measurement data of the plurality of to-be-measured terminal devices. Alternatively, the measurement information includes the IDs of the plurality of to-be-measured terminal devices, and the LMF determines location estimation of the plurality of to-be-measured terminal devices based on the IDs of the plurality of to-be-measured terminal devices and the location information of the relay node, where the location estimation is sketchy location information of the plurality of to-be-measured terminal devices. For example, the location estimation is sketchy location information determined based on the location information of the relay node. Specifically, the LMF may use all or a part of the location information of the relay node as a substitute for locations of terminal devices around the relay. There may be another manner for the location management function center network element to determine, based on the location information of the relay node, the location estimation of the terminal device around the relay node. This is not limited in this application. Alternatively, the measurement information includes the IDs of the plurality of to-be-measured terminal devices and the relative location information determined by the relay node based on the measurement data of the to-be-measured terminal devices, and the LMF determines the location information of the plurality of to-be-measured terminal devices based on the relative location information and the location information of the relay node.

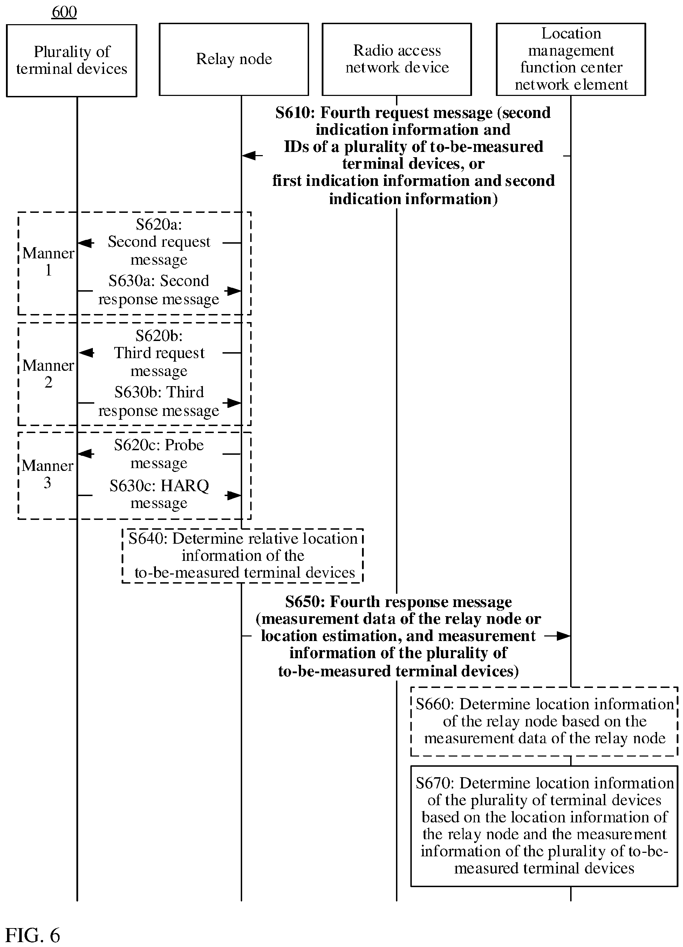

FIG. 6 is a schematic flowchart of another method for determining a location of a terminal device according to this application. As shown in FIG. 6, the method includes the following steps.

S610: An LMF sends a fourth request message to a relay node, where the fourth request message is used to request measurement data or location information of a relay node.

Specifically, the LMF sends the fourth request message to the relay node, where the message may be a request location information (Request Location Information) message, and the fourth request message is used to request the measurement data of the relay node or the location information of the relay node. The message carries second indication information, and the second indication information indicates the relay node to report measurement information of a plurality of to-be-measured terminal devices. When the plurality of to-be-measured terminal devices are a plurality of terminal devices known to the LMF, the fourth request message may further include IDs of the plurality of to-be-measured terminal devices. Alternatively, when the plurality of to-be-measured terminal devices are a plurality of terminal devices unknown to the LMF, the fourth request message may further include the first indication information in S520.

S620: The relay node receives the fourth request message, and the relay node reports the measurement data or the location information of the relay node and the measurement information of the to-be-measured terminal devices.

Specifically, the relay node may report the measurement data or the location information of the relay node and the measurement information of the to-be-measured terminal devices in the following manners: Manner 1: S620a: The relay node receives the fourth request message, where the fourth request message carries second indication information, and the fourth request message includes the IDs of the plurality of to-be-measured terminal devices; and the relay node sends a second request message to terminal devices indicated by the plurality of IDs through multicast or unicast, where the second request message is used to request the measurement data of the terminal devices. In S630a, the terminal devices report the measurement data to the relay node, where the type of the measurement data is described in S520. Manner 2: S620b: The fourth request message carries the first indication information and the second indication information; after receiving the fourth request message, the relay node sends the second request message to the plurality of terminal devices through broadcast; after receiving the second request message, the plurality of terminal devices report the measurement data and the IDs of the terminal devices to the relay node; and the relay node determines the plurality of terminal devices as the to-be-measured terminal devices. S630b: After receiving a third request message, the plurality of terminal devices return a third response message to the relay node, where the third response message includes the IDs and the measurement data of the terminal devices; and the relay node determines the plurality of terminal devices as the to-be-measured terminal devices. Manner 3: S620c: The relay node receives the fourth request message, where the fourth request message carries the first indication information and the second indication information; and the relay node sends a probe message to the plurality of terminal devices through broadcast. S630c: After receiving the probe message, the plurality of terminal devices return a response message to the relay node, where the response message is a HARQ message, the response message includes the IDs of the terminal devices; and the relay node determines the plurality of terminal devices as the to-be-measured terminal devices.

S640: In the foregoing two manners, when the measurement information obtained by the relay node is the measurement data of the to-be-measured terminal devices, optionally, the relay node may further determine, based on the measurement data, relative location information of the to-be-measured terminal devices relative to the relay node.

S650: The relay node sends a fourth response message to the LMF; correspondingly, the LMF receives the fourth response message, where the fourth response message includes the measurement data or the location information of the relay node and the measurement information of the plurality of terminal devices.

Specifically, based on the different measurement information of the plurality of to-be-measured terminal devices that is obtained in S620, the fourth response message includes: the measurement data or the location information of the relay node, and the measurement data of the to-be-measured terminal devices; or the measurement data or the location information of the relay node, and the measurement data and the IDs of the to-be-measured terminal devices; or the measurement data or the location information of the relay node, and the IDs of the to-be-measured terminal devices. When the measurement information obtained by the relay node is the measurement data of the to-be-measured terminal devices, the relay node may skip reporting the measurement data of the to-be-measured terminal devices, but report the relative location information of the to-be-measured terminal device relative to the relay node that is determined based on the measurement data.

Optionally, in S660, when the fourth response message includes the measurement data of the relay node, the LMF determines the location information of the relay node based on the measurement data of the relay node.

S670: The LMF determines the location information of the to-be-measured terminal devices based on the location information of the relay node and the measurement information of the to-be-measured terminal devices.

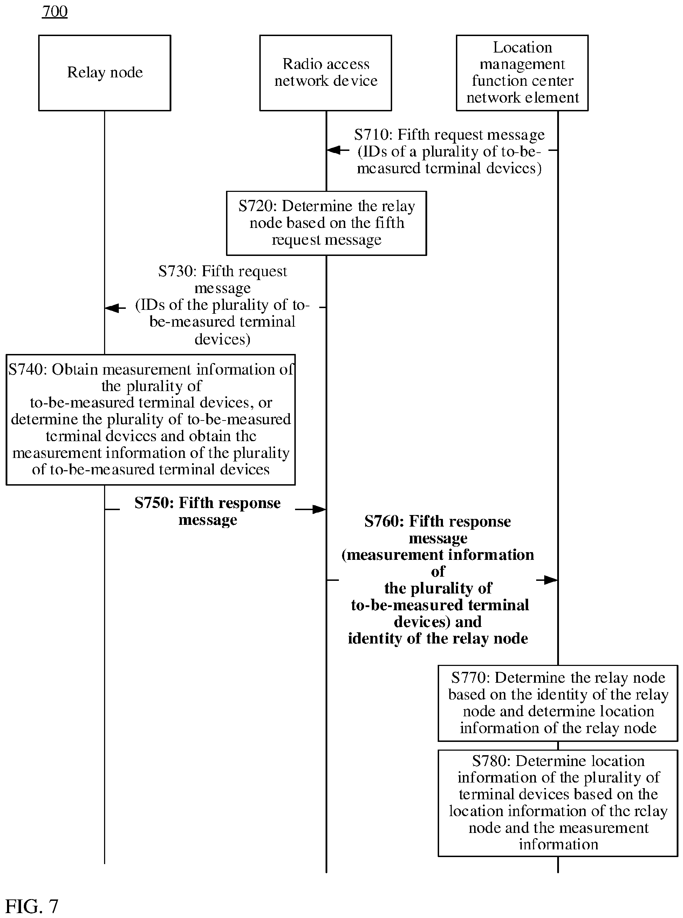

FIG. 7 is a schematic flowchart of another method for determining a location of a terminal device according to this application. As shown in FIG. 7, the method includes the following steps.

S710: An LMF sends a fifth request message to a radio access network device, where the fifth request message is used to request measurement information of a plurality of terminal devices, and the fifth request message carries IDs of a plurality of to-be-measured terminal devices.

S720: The radio access network device receives the fifth request message, and determines a relay node based on the IDs of the plurality of to-be-measured terminal devices carried in the fifth request message.

S730: The radio access network device forwards the fifth request message to the relay node.

S740: The relay node receives the fifth request message, and the relay node obtains measurement information of the plurality of to-be-measured terminal devices based on the fifth request message, or determines the plurality of to-be-measured terminal devices and obtains the measurement information of the plurality of to-be-measured terminal devices. Optionally, the relay node may further determine relative location information of the to-be-measured terminal devices relative to the relay node based on measurement data of the to-be-measured terminal devices.

S750: The relay node sends a fifth response message to the radio access network device, where the fifth response message is similar to that in S540; and correspondingly, the radio access network device receives the fifth response message, where the fifth response message includes the measurement information of the plurality of to-be-measured terminal devices.

S760: The radio access network device sends, to the LMF, the fifth response message and an identity of the relay node determined by the radio access network device.

S770: The LMF determines the relay node and determines location information of the relay node based on the identity of the relay node in the fifth response message, and the location information of the relay node is determined based on the method in S410.

S780. The LMF determines location information of the to-be-measured terminal devices based on the location information of the relay node and the measurement information of the to-be-measured terminal devices.

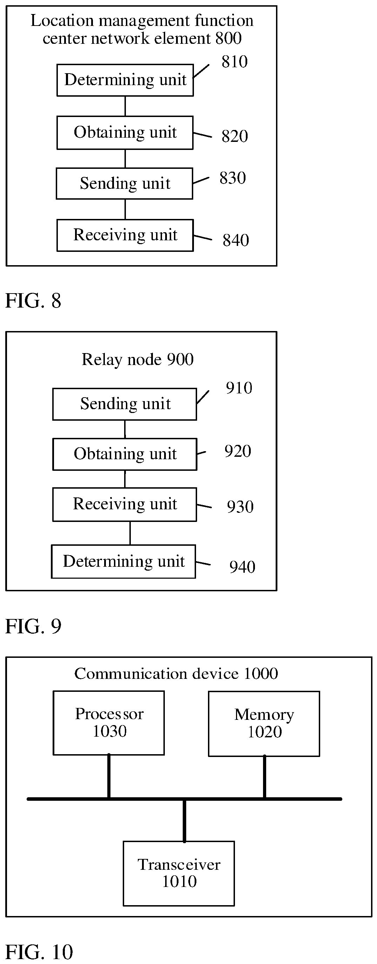

FIG. 8 is a schematic block diagram of a location management function center network element 800 according to this application. As shown in FIG. 8, the location management function center network element 800 includes the following units:
a determining unit 810, configured to determine location information of a relay node; and
an obtaining unit 820, configured to obtain measurement information of a plurality of to-be-measured terminal devices.

The determining unit 810 is further configured to determine location information of the plurality of to-be-measured terminal devices based on the location information of the relay node and the measurement information of the plurality of to-be-measured terminal devices.

Further, the location management function center network element 800 further includes a sending unit 830, configured to send a first request message to the relay node, where the first request message is used to request the relay node to report the measurement information of the plurality of to-be-measured terminal devices. When the plurality of to-be-measured terminal devices are terminal devices unknown to the LMF, the first request message may further include first indication information, and the first indication information indicates the relay node to determine and report the measurement information of the to-be-measured terminal devices.

The location management function center network element 800 further includes a receiving unit 840, configured to receive a first response message sent by the relay node, where the first response message includes the measurement information of the plurality of to-be-measured terminal devices. The measurement information of the terminal devices may be at least one of the following information: identities of the terminal devices, measurement data of the terminal devices, and relative location information of the terminal devices relative to the relay node.

The determining unit 810 is further configured to determine location estimation of the to-be-measured terminal devices based on the IDs of the to-be-measured terminal devices and the location information of the relay node, where the location estimation is sketchy location information of the plurality of to-be-measured terminal devices. For example, the location estimation is sketchy location information determined based on the location information of the relay node. Specifically, the LMF may use all or a part of the location information of the relay node as a substitute for locations of terminal devices around the relay.

Optionally, the sending unit 830 may be further configured to send a fourth request message, where the fourth request message is used to request measurement data or the location information of the relay node, the message carries second indication information, and the second indication information indicates the relay node to report the measurement information of the plurality of to-be-measured terminal devices. The receiving unit may be further configured to receive a fourth response message, where the fourth response message includes the measurement data or location estimation of the relay node and the measurement information of the plurality of to-be-measured terminal devices.

Optionally, the sending unit 830 may be further configured to send a fifth request message to a radio access network device, where the fifth request message is used to request measurement information of a plurality of terminal devices, and the fifth request message carries IDs of a plurality of to-be-measured terminal devices. The receiving unit may be further configured to receive the measurement information of the to-be-measured terminal devices and an identity of the relay node determined by the radio access network device that are sent by the radio access network device.

The sending unit is further configured to send location capability query information to the plurality of to-be-measured terminal devices, the receiving unit is further configured to receive feedback information sent by the terminal devices, where the feedback information carries information about whether the plurality of terminal devices have a sidelink-supporting capability, and the determining unit is further configured to determine one terminal device in the plurality of terminal devices that have the sidelink-supporting capability as the relay node, and the remaining terminal devices are the to-be-measured terminal devices.

Optionally, the sending unit 830 may be further configured to send a sixth request message to the radio access network device, where the sixth request message is used to request the radio access network device to determine the relay node, the sixth request message carries the IDs of the plurality of to-be-measured terminal devices, and the receiving unit is configured to receive the identity of the relay node determined by the radio access network device.

The determining unit is further configured to determine a radio access network device shared by the plurality of to-be-measured terminal devices as the relay node, and the sending unit is further configured to send a location request message to the radio access network device, where the location request message is used to request location information of the radio access network device.

It should be understood that units in the location management function center network element 800 may be separately configured to perform actions or processing procedures of the location management function center network element according to the methods shown in FIG. 4 to FIG. 7. To avoid repetition, detailed descriptions are omitted.

FIG. 9 is a schematic block diagram of a relay node 900 according to this application. As shown in FIG. 9, the relay node 900 includes the following units:
a sending unit 910, where the sending unit is configured to send location information or measurement data of the relay node to a location management function center network element, and the measurement data is used by the location management function center network element to determine the location information of the relay node; and
an obtaining unit 920, configured to obtain measurement information of a plurality of to-be-measured terminal devices.

The sending unit is further configured to send the measurement information of the plurality of to-be-measured terminal devices to the location management function center network element, so that the location management function center network element determines location information of the plurality of to-be-measured terminal devices based on the location information of the relay node and the measurement information of the plurality of to-be-measured terminal devices.

The relay node further includes a receiving unit 930, configured to receive a first request message sent by the location management function center network element, where the first request message is used to request the relay node to report the measurement information of the plurality of to-be-measured terminal devices, the first request message carries IDs of the plurality of to-be-measured terminal devices, or the first request message carries first indication information, and the first indication information indicates the relay node to determine the plurality of to-be-measured terminal devices.

When the first request message received by the receiving unit carries the IDs of plurality of to-be-measured terminal devices, the obtaining unit is specifically configured to send, through multicast or unicast, a second request message to terminal devices indicated by the IDs, where the second request message is used to request measurement data of the plurality of to-be-measured terminal devices, and the obtaining unit receives the measurement data of the plurality of to-be-measured terminal devices. Alternatively, when the first request message received by the receiving unit carries the first indication information, the obtaining unit is specifically configured to send a probe message through broadcast, where the probe message is used by the relay node to determine the to-be-measured terminal devices, and the obtaining unit receives the IDs of plurality of to-be-measured terminal devices. Alternatively, the obtaining unit is specifically configured to send a third request message through broadcast, the obtaining unit receives the measurement data and the IDs of the to-be-measured terminal devices, and the to-be-measured terminal devices are a plurality of terminal devices that receive the third request message.

The relay node further includes a determining unit 940, configured to determine relative location information of the plurality of to-be-measured terminal devices. The determining unit is specifically configured to determine distances and/or angles from the plurality of terminal devices to the relay node based on the measurement data of the to-be-measured terminal devices; or determine measurement information coordinates of the plurality of terminal devices based on measurement results of the plurality of terminal devices.

The sending unit 910 is specifically configured to send a first response message to the location management function center network element, where the first response message includes the measurement data or location estimation of the relay node and the measurement information of the to-be-measured terminal devices.

It should be understood that units in the relay node 900 may be separately configured to perform actions or processing procedures of the relay node according to the methods shown in FIG. 4 to FIG. 7. To avoid repetition, detailed descriptions are omitted.

The foregoing location management function center network element and the relay node are completely corresponding to the location management function center network element and the relay node in the method embodiment, and a corresponding unit performs a corresponding step. For details, refer to a corresponding method embodiment.

FIG. 10 is a schematic block diagram of a communication apparatus 1000 according to this application. The communication apparatus 1000 includes:
a memory 10 10, configured to store a program, where the program includes code;
a transceiver 1020, configured to communicate with another device; and
a processor 1030, configured to execute the program code in the memory 1010.

Optionally, when the code is executed, the processor 1030 may implement operations in the method 400. For brevity, details are not described herein again. The transceiver 1020 is configured to perform specific signal sending and receiving when driven by the processor 1030.

The communication apparatus 1000 may be any one of the location management function center network element and the relay node, and perform operations of the determining unit. The transceiver may include a transmitter and/or a receiver that respectively perform corresponding steps of the sending unit and the receiving unit.

This application further provides a communication system 300. For an architectural diagram of the communication system 300, refer to FIG. 3. The communication system 300 includes a location management function center network element and a relay node.

Optionally, the system further includes a radio access network. The radio access network is configured to receive a sixth request message sent by the location management function center network element, and the sixth request message is used to request the radio access network device to determine the relay node. The radio access network device sends an ID of the relay node. Optionally, the radio access network may be further configured to forward a fifth request message sent by the location management function center network element, and the fifth request message is used to request the relay node to report measurement data of a plurality of terminal devices.

The foregoing location management function center network element and the relay node are completely corresponding to the location management function center network element and the relay node in the method embodiment, and a corresponding unit performs a corresponding step. For details, refer to a corresponding method embodiment.

It should be understood that, the communication system 300 may further include another network element or function entity. This is not limited in embodiments of the present invention.

A person of ordinary skill in the art may be aware that, in combination with the examples of units and algorithm steps described in embodiments disclosed in this specification, this application may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the solution of embodiments.

In addition, functional units in embodiments of this application may be integrated into one processing unit, each of the units may exist alone physically, or two or more units are integrated into one unit.

It should be understood that, the term "and/or" and "at least one of A or B" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

An embodiment of this application provides a computer-readable medium, configured to store a computer program. The computer program includes the method for determining a location of a terminal device in the embodiment of this application in FIG. 4. When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

All or some of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium, a semiconductor medium (for example, a Solid State Disk (SSD)), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for determining a location of a terminal device, comprising:
determining, by a location management function center network element, location information of a relay node;
obtaining, by the location management function center network element, measurement information of a plurality of to-be-measured terminal devices; and
determining, by the location management function center network element, location information of the plurality of to-be-measured terminal devices based on the location information of the relay node and the measurement information.

2. The method according to claim 1, wherein before the determining, by a location management function center network element, location information of a relay node, the method further comprises:
sending, by the location management function center network element, location capability query information to a plurality of terminal devices;
receiving, by the location management function center network element, location capability feedback information from the plurality of terminal devices;
determining, by the location management function center network element based on the location capability feedback information, one of a plurality of terminal devices that have a sidelink-supporting capability in the plurality of terminal devices as the relay node; and
determining, by the location management function center network element, all or some of a plurality of other terminal devices, other than the relay node, in the plurality of terminal devices that have the sidelink-supporting capability as the plurality of to-be-measured terminal devices.

3. The method according to claim 1, wherein before the determining, by a location management function center network element, location information of a relay node, the method further comprises:
sending, by the location management function center network element, a sixth request message to a radio access network device, wherein the sixth request message is used to request the radio access network device to determine the relay node, the sixth request message comprises identities of the plurality of to-be-measured terminal devices, and the plurality of to-be-measured terminal devices are terminal devices that have a sidelink-supporting capability; and
receiving, by the location management function center network element, an identity of the relay node from the radio access network device, wherein the relay node is determined by the radio access network device based on the identities of the plurality of to-be-measured terminal devices.

4. The method according to claim 1, wherein before the determining, by a location management function center network element, location information of a relay node, the method further comprises:
determining, by the location management function center network element, a serving radio access network device of the plurality of to-be-measured terminal devices as the relay node.

5. The method according to any one of claims 1 to 4, wherein the obtaining, by the location management function center network element, measurement information of a plurality of to-be-measured terminal devices comprises:
sending, by the location management function center network element, a first request message to the relay node, wherein the first request message is used to request the relay node to report the measurement information of the plurality of to-be-measured terminal devices; and
receiving, by the location management function center network element, a first response message from the relay node, wherein the first response message comprises the measurement information of the plurality of to-be-measured terminal devices.

6. The method according to any one of claims 1 to 4, wherein the obtaining, by the location management function center network element, measurement information of a plurality of terminal devices comprises:
sending, by the location management function center network element, a fourth request message to the relay node, wherein the fourth request message is used to request measurement data or the location information of the relay node, the fourth request message carries first indication information, and the first indication information indicates the relay node to send the measurement information of the plurality of to-be-measured terminal devices; and
receiving, by the location management function center network element, a fourth response message from the relay node, wherein the fourth response message comprises the measurement data or the location information of the relay node and the measurement information of the plurality of to-be-measured terminal devices.

7. The method according to claim 6, wherein the determining, by a location management function center network element, location information of a relay node comprises:
determining, by the location management function center network element, the location information of the relay node based on the measurement data of the relay node.

8. The method according to claim 5 or 6, wherein the first request message comprises any one or more of the following information:
periodic reporting indication information, a reporting period, a quantity of times of reporting, and a type of measurement data.

9. The method according to claim 5 or 6, wherein the measurement information comprises at least one of the following information:
the identities of the plurality of to-be-measured terminal devices;
measurement data of the plurality of to-be-measured terminal devices; and
relative location information of the plurality of to-be-measured terminal devices relative to the relay node.

10. The method according to claim 9, wherein the measurement data comprises any one or more of the following data:
a sidelink reference signal receiving power, an angle of arrival, and a time difference between sending and receiving.

11. A method for determining a location of a terminal device, comprising:
sending, by a relay node, location information or measurement data of the relay node to a location management function center network element, wherein the measurement data is used by the location management function center network element to determine the location information of the relay node;
obtaining, by the relay node, measurement information of a plurality of to-be-measured terminal devices; and
sending, by the relay node, the measurement information of the plurality of to-be-measured terminal devices to the location management function center network element, so that the location management function center network element determines location information of the plurality of to-be-measured terminal devices based on the location information of the relay node and the measurement information of the plurality of to-be-measured terminal devices.

12. The method according to claim 11, wherein before the obtaining, by the relay node, measurement information of a plurality of to-be-measured terminal devices, the method further comprises:
receiving, by the relay node, a first request message sent by the location management function center network element, wherein the first request message is used to request the relay node to report the measurement information of the plurality of to-be-measured terminal devices, the first request message carries identities of the plurality of to-be-measured terminal devices, or the first request message carries first indication information, and the first indication information indicates the relay node to determine the plurality of to-be-measured terminal devices.

13. The method according to claim 12, wherein when the first request message carries the identities of the plurality of to-be-measured terminal devices, the obtaining, by the relay node, measurement information of a plurality of to-be-measured terminal devices comprises:
sending, by the relay node, a second request message to the plurality of to-be-measured terminal devices through multicast or unicast, wherein the second request message is used to request measurement data of the plurality of to-be-measured terminal devices; and
receiving, by the relay node, a second response message sent by the plurality of to-be-measured terminal devices, wherein the second response message comprises the measurement data of the plurality of to-be-measured terminal devices, and the measurement information of the plurality of to-be-measured terminal devices comprises the measurement data of the plurality of to-be-measured terminal devices.

14. The method according to claim 11, wherein when the first request message carries the first indication information, the obtaining, by the relay node, measurement information of a plurality of to-be-measured terminal devices comprises:
sending, by the relay node, a probe message to a plurality of terminal devices through broadcast;
receiving, by the relay node, a response message sent by the plurality of terminal devices, wherein the response message comprises identities of the plurality of terminal devices; and
determining, by the relay node based on the response message, the plurality of terminal devices as the plurality of to-be-measured terminal devices, wherein the measurement information of the plurality of to-be-measured terminal devices comprises identities of the plurality of to-be-measured terminal devices.

15. The method according to claim 11 or 13, wherein the measurement data comprises any one or more of the following data:
a sidelink reference signal receiving power, an angle of arrival, and a time difference between sending and receiving.

16. The method according to claim 13, wherein the method further comprises:
determining, by the relay node, relative location information of the plurality of to-be-measured terminal devices based on the measurement data of the plurality of to-be-measured terminal devices.

17. The method according to claim 16, wherein the determining, by the relay node, relative location information of the plurality of to-be-measured terminal devices based on the measurement data of the plurality of to-be-measured terminal devices comprises:
determining, by the relay node, distances and/or angles from the plurality of terminal devices to the relay node based on the measurement data of the plurality of terminal devices; or
determining, by the relay node, measurement information coordinates of the plurality of terminal devices based on measurement results of the plurality of terminal devices.

18. A location management function center network element, comprising:
a determining unit, configured to determine location information of a relay node; and
an obtaining unit, configured to obtain measurement information of a plurality of to-be-measured terminal devices, wherein
the determining unit is further configured to determine location information of the plurality of to-be-measured terminal devices based on the location information of the relay node and the relative location information.

19. The location management function center network element according to claim 18, wherein the location management function center network element further comprises:
a sending unit, configured to send location capability query information to a plurality of terminal devices;
a receiving unit, configured to receive location capability feedback information from the plurality of terminal devices;
the determining unit is further configured to determine, based on the location capability feedback information, one of a plurality of terminal devices that have a sidelink-supporting capability in the plurality of terminal devices as the relay node; and
the determining unit is further configured to determine all or some of a plurality of other terminal devices, other than the relay node, in the plurality of terminal devices that have the sidelink-supporting capability as the plurality of to-be-measured terminal devices.

20. The location management function center network element according to claim 18, wherein
the sending unit is further configured to send a sixth request message to a radio access network device, wherein the sixth request message is used to request the radio access network device to determine the relay node, the sixth request message comprises identities of the plurality of to-be-measured terminal devices, and the plurality of to-be-measured terminal devices are terminal devices that have a sidelink-supporting capability; and
the receiving unit is configured to receive an identity of the relay node from the radio access network device, wherein the relay node is determined by the radio access network device based on the identities of the plurality of to-be-measured terminal devices.

21. The location management function center network element according to claim 18, wherein
the determining unit is further configured to determine a radio access network device shared by the plurality of to-be-measured terminal devices as the relay node.

22. The location management function center network element according to claim 18, wherein the obtaining unit is specifically configured to:
send a first request message to the relay node, wherein the first request message is used to request the relay node to report the measurement information of the plurality of to-be-measured terminal devices; and
receive a first response message from the relay node, wherein the first response message comprises the measurement information of the plurality of to-be-measured terminal devices.

23. The location management function center network element according to any one of claims 18 to 21, wherein the obtaining unit is specifically configured to:
send a fourth request message to the relay node, wherein the fourth request message is used to request measurement data or the location information of the relay node, the first request message carries second indication information, and the second indication information indicates the relay node to report the measurement information of the plurality of to-be-measured terminal devices; and
receive a fourth response message from the relay node, wherein the fourth response message comprises the measurement data or the location information of the relay node and the measurement information of the plurality of to-be-measured terminal devices.

24. The location management function center network element according to claim 23, wherein the determining unit is specifically configured to:
determine the location information of the relay node based on the measurement data of the relay node.

25. The location management function center network element according to claim 22 or 23, wherein the first request message comprises any one or more of the following information:
periodic reporting indication information, a reporting period, a quantity of times of reporting, and a type of measurement data.

26. The location management function center network element according to claim 22 or 23, wherein the measurement information comprises at least one of the following information:
the identities of the plurality of to-be-measured terminal devices;
measurement data of the plurality of to-be-measured terminal devices; and
relative location information of the plurality of to-be-measured terminal devices relative to the relay node.

27. The location management function center network element according to claim 26, wherein the measurement data comprises any one or more of the following data:
a sidelink reference signal receiving power, an angle of arrival, and a time difference between sending and receiving.

28. A relay node, comprising:
a sending unit, configured to send location information or measurement data of the relay node to a location management function center network element, wherein the measurement data is used by the location management function center network element to determine the location information of the relay node; and
an obtaining unit, configured to obtain measurement information of a plurality of to-be-measured terminal devices, wherein
the sending unit is further configured to send the measurement information of the plurality of to-be-measured terminal devices, so that the location management function center network element determines location information of the plurality of to-be-measured terminal devices based on the location information of the relay node and the measurement information of the plurality of to-be-measured terminal devices.

29. The relay node according to claim 28, wherein the relay node further comprises a receiving unit, wherein the receiving unit is configured to:
receive a first request message sent by the location management function center network element, wherein the first request message is used to request the relay node to report the measurement information of the plurality of to-be-measured terminal devices, the first request message carries identities of the plurality of to-be-measured terminal devices, or the first request message carries first indication information, and the first indication information indicates the relay node to determine the plurality of to-be-measured terminal devices.

30. The relay node according to claim 28, wherein when the first request message carries the identities of the plurality of to-be-measured terminal devices, the obtaining unit is specifically configured to:
send a second request message to the plurality of to-be-measured terminal devices through multicast or unicast, wherein the second request message is used to request the measurement data of the plurality of to-be-measured terminal devices; and
receive a second response message sent by the plurality of to-be-measured terminal devices, wherein the second response message comprises the measurement data of the plurality of to-be-measured terminal devices, and the measurement information of the plurality of to-be-measured terminal devices comprises the measurement data of the plurality of to-be-measured terminal devices.

31. The relay node according to claim 28, wherein when the first request message carries the first indication information, the obtaining unit is specifically configured to:
send a probe message to a plurality of terminal devices through broadcast; and
receive a response message sent by the plurality of terminal devices, wherein the response message comprises identities of the plurality of terminal devices; and the relay node determines the plurality of terminal devices as the plurality of to-be-measured terminal devices, wherein the measurement information of the plurality of to-be-measured terminal devices comprises identities of the plurality of to-be-measured terminal devices.

32. The relay node according to claim 28 or 30, wherein the measurement data comprises any one or more of the following data:
a sidelink reference signal receiving power, an angle of arrival, and a time difference between sending and receiving.

33. The relay node according to claim 30, wherein the relay node further comprises a determining unit, and the determining unit is configured to:
determine relative location information of the plurality of to-be-measured terminal devices based on the measurement data of the plurality of to-be-measured terminal devices.

34. The relay node according to claim 33, wherein the determining unit is specifically configured to:
determine distances and/or angles from the plurality of terminal devices to the relay node based on the measurement data of the plurality of terminal devices; or
determine relative location coordinates of the plurality of terminal devices relative to the relay node based on measurement results of the plurality of terminal devices.

35. A computer storage medium, wherein the computer storage medium stores program instructions, and when the instructions are executed, a location management function center network element is enabled to perform the method according to any one of claims 1 to 10; or
when the instructions are executed, a relay node is enabled to perform the method according to any one of claims 11 to 17.

36. A chip system, comprising at least one processor, wherein the at least one processor is configured to execute stored instructions, to enable a location management function center network element to perform the method according to claims 1 to 10; or
the at least one processor is configured to execute stored instructions, to enable a relay node to perform the method according to any one of claims 11 to 17.

37. A communication system, wherein the system comprises:
the location management function center network element according to claims 18 to 27; and
the relay node according to any one of claims 28 to 34.
